# EUROPEAN PATENT APPLICATION

(11) **EP 1 930 890 A1**
(43) Date of publication of application: **11.06.2008**
(21) Application number: 07022688.1
(22) Date of filing: 22.11.2007
(51) Int. Cl.: G11B 7/135

(54) **Optical pickup device**

(30) Priority: 04.12.2006 JP 2006326405
(71) Applicant: Funai Electric Co., Ltd., Daito-shi Osaka 574-0013 (JP)
(72) Inventor: Nishioka, Ken, Daito-shi Osaka 574-0013 (JP); Sasabe, Mitsuyoshi, Daito-shi Osaka 574-0013 (JP); Hamaoka, Mika, Daito-shi Osaka 574-0013 (JP)
(74) Representative: Beetz & Partner

(57) **Abstract**

An optical pickup device includes a beam shaping mirror. The mirror has a first optical surface on which a wavelength selection film is formed and a second optical surface on which a diffraction grating is formed. The wavelength selection film transmits a first laser beam and reflects a second laser beam. Light intensity distribution of the first laser beam is converted from an elliptic shape to a circular shape by reflecting the first laser beam transmitted by the wavelength selection film and input to the beam shaping mirror by the diffraction grating, then transmitting it by the wavelength selection film and outputting it from the beam shaping mirror. The diffraction grating diffracts the first laser beam in order that directions of the first and second laser beams which are output from the beam shaping mirror become the same.

## Description

### BACKGROUND OF THE INVENTION

### 1. Field of the Invention

The present invention relates to an optical pickup device, in particular, the present invention relates to an optical pickup device which is, for example, compatible with a plurality of kinds of optical discs such as a CD (compact disc), a DVD (digital versatile disc), a BD (Blu-ray Disc or the like: high density optical disc utilizing blue laser beam) and the like.

### 2. Description of Related Art

For example, in an optical pickup device which is applicable to a plurality of kinds of optical discs (for example, CD, DVD, and BD) in which wavelengths of used laser beams are different by one objective lens, it is necessary to make a beam spot which is formed by the objective lens in a circular shape which has a small diameter in order that enough reproducing signal is obtained from any kind of the optical discs. Beam shaping for it is effective to make a spot shape into circular shape without reducing efficiency of light utilization. Especially in a case for blue laser beam, the beam shaping is necessary for securing rim strength (that is, peripheral intensity ratio of flux of light which is input to the objective lens). Further, because coma aberration is generated if input directions of the respective laser beams to the objective lens are different, it is also necessary that inclination with respect to an optical axis is corrected such that all the laser beams are input to the objective lens from the same direction.

As for the spot shape, an optical pickup device in which the laser beam is converted from an elliptic shape beam to a circular shape beam by an upstand mirror which has the beam shaping function, is proposed in JP-A-2003-098350, and JP-A-2002-304761. Further, JP-A-2003-098350, JP-A-2002-304761 and JP-A-2002-163836 have proposed optical pickup devices correcting the inclination of a direction of the laser beam with respect to an optical axis by the upstand mirror having wavelength selection film. In the upstand mirror, the wavelength selection film and a total reflection film are formed and the correction is performed such that laser beam having the wavelength which corresponds to that of the laser beam which is reflected by the wavelength selection film and laser beam having the wavelength which corresponds to that of the laser beam transmitted by the wavelength selection film and reflected by the total reflection film have the same inclination state with respect to the optical axis.

In the optical pickup device which is applicable to a plurality of kinds of optical discs in which wavelengths of used laser beams are different by one objective lens, when aberration correction of an objective lens is performed in an infinite system for a particular wavelength, the aberration correction for other wavelengths has to be performed in a finite system. For example, in an optical pickup device which is applicable to three kinds of optical discs in which wavelengths of used laser beams are different by one objective lens and three laser light sources which emits the blue laser beam, the red laser beam, and the infrared laser beam respectively, if three wavelength compatibility is realized utilizing an objective lens which the aberration is corrected in the infinite system for the blue laser beam, the objective lens has to be the finite system for red or infrared laser beam in order to perform the aberration correction for red or infrared laser beam.

However, if the upstand mirror described in JP-A-2003-098350, JP-A-2002-304761, or JP-A-2002-163836 is utilized, the red or infrared laser beam is input in a divergent state to a transparent member which forms the upstand mirror when the objective lens is used as the finite system for the red laser beam or the infrared laser beam. When the divergent light is transmitted by the transparent member, good beam spot becomes not obtained because astigmatism is generated there. Because they have supposed that parallel light is input to the upstand mirror described in JP-A-2003-098350, JP-A-2002-304761, and JP-A-2002-163836, there is no consideration for the astigmatism which is generated by input of the divergent light as above described.

### SUMMARY OF THE INVENTION

It is an object of the present invention to provide an optical pickup device applicable to a plurality of wavelengths and including a beam shaping mirror capable of a beam shaping for one wavelength among the wavelengths but not generating aberration in the respective wavelengths.

An optical pickup device in an aspect of the present invention is applicable to a plurality of kinds of optical discs in which wavelengths of used laser beams are different by a plurality of laser light sources which emit laser beams having different wavelength each other, and one objective lens, the device includes: a beam shaping mirror disposed in an optical path between the objective lens and the plurality of laser light sources. The beam shaping mirror is composed of a transparent member having a first optical surface on which a wavelength selection film is formed and a second optical surface on which a diffraction grating is formed. And the first and second optical surfaces are positioned in not parallel. The optical pickup device has a structure in which a first laser beam is input to the objective lens as infinite system light and a second laser beam is input to the objective lens as finite system light among the plurality of laser beams emitted from the plurality of laser light sources. The wavelength selection film has wavelength selectivity transmitting the first laser beam and reflecting the second laser beam. Light intensity distribution of the first laser beam is converted from an elliptic shape to a circular shape by reflecting the first laser beam transmitted by the wavelength selection film and input to the beam shaping mirror by the diffraction grating, then transmitting it by the wavelength selection film and outputting it from the beam shaping mirror. The diffraction grating diffracts the first laser beam in order that directions of the first and second laser beams which are output from the beam shaping mirror become the same.

### BRIEF DESCRIPTION OF THE DRAWINGS

Fig. 1 is a schematic diagram to show an embodiment of an optical pickup device;
Figs. 2A and 2B are diagrams to show a cross section and an optical path in a beam shaping mirror;
Figs. 3A to 3C are diagrams of an optical path for explaining structure and operation of a diffraction grating which is included in the beam shaping mirror; and
Figs. 4A and 4B are diagrams of an optical path for explaining inclination correction with respect to an optical axis in a beam shaping mirror.

### DETAILED DESCRIPTION OF THE PREFERRED EMBODIMENTS

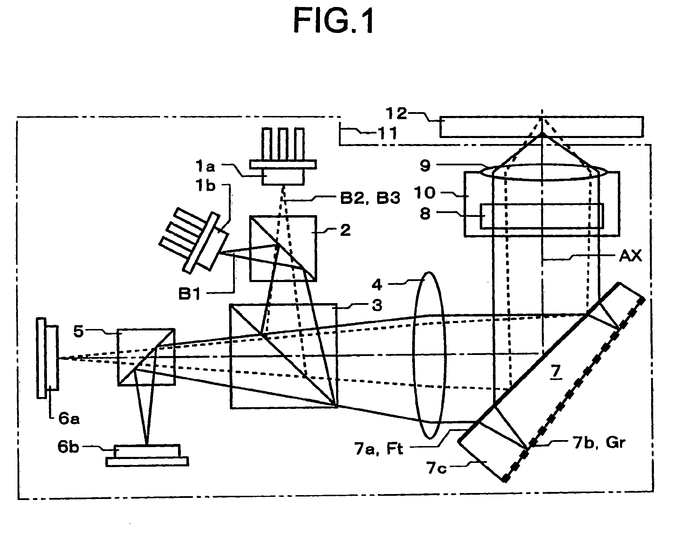

Hereinafter embodiment and the like of an optical pickup device in accordance with the present invention will be described with reference to the attached drawings. In Fig. 1 general structure of one embodiment of an optical pickup device is shown schematically. This optical pickup device 11 is a three wavelength and one lens type optical pickup device which is applicable to three kinds of optical discs 12 in which wavelengths of used laser beams are different by one objective lens 9 and three laser light sources having different oscillation wavelengths and composed of two light sources mounted on a two wavelength semiconductor laser 1a for red or infrared laser and one light source mounted on a semiconductor laser 1b for the blue laser. And the device 11 has a structure which can perform recording and reproducing of information for each of the three kinds of optical discs 12.

The three kinds of optical discs 12 which are supposed here are, for example, a first optical disc which is applicable to the blue laser having wavelength of λ1 405 nm, i.e., a high density optical disc using blue laser beam, having base plate thickness of 0.1 mm and numerical aperture (NA) of 0.85, a second optical disc which is applicable to red laser having wavelength of λ2 650 nm, i.e., a DVD having base plate thickness of 0.6 mm, NA of 0.6 to 0.65 and a third optical disc which is applicable to infrared laser having wavelength of λ3 780 nm, i.e., a CD having base plate thickness of 1.2 mm, NA of 0.45 to 0.5. However, wavelengths which are used are not limited to these examples. Further, application target of the present invention is not limited to the optical disc, but the present invention can be applied to optical information recording media other than optical disc.

The optical pickup device 11 which is shown in Fig. 1 is equipped with the two wavelength semiconductor laser 1a for red and infrared laser, the semiconductor laser 1b for blue laser, a dichroic prism 2, a beam splitter 3, a collimator lens 4, a dichroic prism 5, a photo detector 6a for the red and infrared laser, a photo detector 6b for the blue laser, a beam shaping mirror 7, an aberration correcting element 8, an objective lens 9, a holder 10, and the like. Hereinafter, an optical structure of the optical pickup device 11 will be explained in an order along its optical path.

The optical pickup device 11 includes the two light sources mounted on the two wavelength semiconductor laser 1a for red and infrared laser and the one light source mounted on the semiconductor laser 1b for blue laser as the laser light sources as above described. Recording or reproducing of the optical information to the corresponding optical disc 12 is performed using a blue laser beam B1 having wavelength of λ1, a red laser beam B2 having wavelength of λ2, or an infrared laser beam B3 having wavelength of λ3, which is emitted by lighting-up of any one of the three laser light sources (λ1 < λ2 < λ3).

The laser beam B1, B2, or B3 which is emitted from the semiconductor laser 1a or 1b is input to the dichroic prism 2. The dichroic prism 2 is an optical path combining element which combines the respective optical paths of the blue laser beam B1, the red laser beam B2, and the infrared laser beam B3. Therefore, the blue laser beam B1 which is emitted from the semiconductor laser 1b is reflected by the dichroic prism 2, the red laser beam B2 or the infrared laser beam B3 which is emitted from the semiconductor laser 1a is transmitted by the dichroic prism 2, as a result, the optical paths of the respective laser beams B1 to B3 are combined.

A part of the laser beam B1, B2, or B3 which is output from the dichroic prism 2 is reflected by the beam splitter 3. The beam splitter 3 is an optical path dividing element which performs dividing of an optical path from the respective semiconductor lasers 1a and 1b to the optical disc 12 (going path) and an optical path from the optical disc 12 to the respective photo detectors 6a, 6b (returning path), and it functions as a half mirror to divide light amount of input light in two to transmitted light and reflected light.

The blue laser beam B1 which is reflected by the beam splitter 3 is converted into parallel light by the collimator lens 4, and then it is input to the beam shaping mirror 7. On the other hand the red laser beam B2 or the infrared laser beam B3 which is reflected by the beam splitter 3 is attenuated its degree of divergence by the collimator lens 4, and then it is input to the beam shaping mirror 7. The beam shaping mirror 7 is composed of a transparent member 7c which has a first optical surface 7a on which a wavelength selection film Ft is formed, and a second optical surface 7b on which a diffraction grating Gr is formed. And the first and second optical surfaces 7a, 7b are positioned in not parallel. That is to say, the beam shaping mirror 7 is composed of the transparent member 7c having a trapezoidal cross section as a base plate. The wavelength selection film Ft is made on the first optical surface 7a on a front surface side of the transparent member 7c and a reflection type diffraction grating Gr is made on the second optical surface 7b on a back surface side of the transparent member 7c.

The wavelength selection film Ft has wavelength selectivity transmitting the blue laser beam B1 and reflecting the red laser beam B2 and the infrared laser beam B3. As a result, the red laser beam B2 or the infrared laser beam B3 which is input to the beam shaping mirror 7, is reflected on the wavelength selection film Ft, then an optical path of it is bent in substantially ninety degrees toward the objective lens 9 in order that it is input to the objective lens 9 as the finite system light. On the other hand, light intensity distribution of the blue laser beam B1 is converted from an elliptic shape into a circular shape by reflecting the blue laser beam B1 transmitted by the wavelength selection film Ft and input to the beam shaping mirror 7 by the diffraction grating Gr, then transmitting it by the wavelength selection film Ft and outputting it from the beam shaping mirror 7. At this time the blue laser beam B1 is diffracted by the diffraction grating Gr such that directions of the blue laser beam B1, the red laser beam B2, and the infrared laser beam B3 which are output from the beam shaping mirror 7, become the same. As a result, light intensity distribution of the blue laser beam B1 is converted from an elliptic shape into a circular shape by the beam shaping function and an optical path of the blue laser beam B1 is bent in substantially ninety degrees toward the objective lens 9 such that it is input to the objective lens 9 in the infinite system. A detail of the beam shaping mirror 7 will be described later.

The laser beam B1, B2, or B3 output from the beam shaping mirror 7 is transmitted by the aberration correcting element 8 (for example, liquid crystal element), and it is condensed by the objective lens 9, then reaches a recording surface of the optical disc 12 for image forming. The aberration correcting element 8 and the objective lens 9 are held by the holder 10, and they are composed to be driven in integrated manner by an actuator (not shown) when focusing, tracking or the like is performed. Because positional relation between the aberration correcting element 8 and the objective lens 9 is kept always (both at information recording and reproducing) in a constant state by the holder 10, deterioration in characteristic caused by the positional displacement between the aberration correcting element 8 and the objective lens 9 can be avoided.

When the information is reproduced, the laser beam B1, B2, or B3 which is reflected on the recording surface of the optical disc 12, passes the objective lens 9 and the aberration correcting element 8 in this order, and it is reflected by the beam shaping mirror 7, passes the collimator lens 4, then a part of it is transmitted by the beam splitter 3. The blue laser beam B 1 is reflected by the dichroic prism 5, the red laser beam B2 or the infrared laser beam B3 is transmitted by the dichroic prism 5 among the laser beams B 1 to B3 which is transmitted by the beam splitter 3. The blue laser beam B1 which is reflected by the dichroic prism 5, reaches a light receiving surface of the photo detector 6b for image forming, the red laser beam B2 or the infrared laser beam B3 transmitted by the dichroic prism 5, reaches the light receiving surface of the photo detector 6a for image forming. The photo detector 6a detects the light information of the received laser beam B2 or B3 and outputs it as an electric signal. And the photo detector 6b detects the light information of the received laser beam B1 and outputs it as an electric signal.

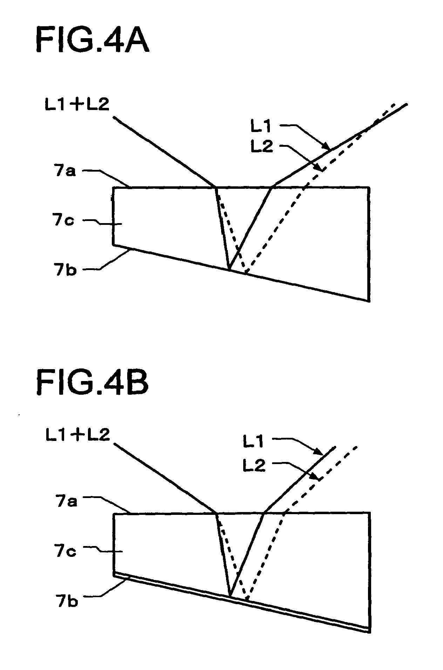

In general prism type (which has the trapezoidal shape cross section or a wedge shape cross section) beam shaping element which has been well known heretofore, the beam shaping is performed by the transparent member which has the transmission surface and the reflecting surface which are positioned in not parallel each other. Because of this, the laser beams which are input to the transmission surface, are refracted at angles which are different with respect to every wavelength by dispersion characteristic of the transparent member. For example, as shown in Fig. 4A, if the blue laser light L1 (solid line), and the red laser light L2 (dotted line) are input from the first optical surface 7a to the transparent member 7c at the same incident angle, directions of laser lights L1 and L2 output from the transparent member 7c become different by difference of an angle of refraction at the first optical surface 7a (that is to say, dispersion characteristic) when the lights are input to the transparent member 7c, because refractive index for the blue laser light L1 is larger than the refractive index for the red laser light L2. This means that inclination is caused with respect to the optical axis of the laser light for one wavelength.

As the present embodiment, if the beam shaping mirror is utilized as the upstand mirror, it is necessary that two laser lights L1 and L2 are corrected such that they have the same inclination state with respect to an optical axis AX (Fig. 1). It is possible to perform the correction by an arrangement of a diffraction grating on the second optical surface 7b of the transparent member 7c. That is to say, as shown in Fig. 4B, if dispersion characteristic of the wavelength which the transparent member 7c has is cancelled out by dispersion characteristic of the diffraction grating, it is possible to realize the beam shaping for two wavelengths without generating the inclination of the optical axis in each of the wavelengths. However, there is a problem if this is applied to the three wavelengths compatibility. The reason of the problem is, for example, in a case where the three wavelengths compatibility is performed by one objective lens which is corrected such that the aberration becomes minimum in the wavelength of blue laser, the objective lens is required to be a finite system for the wavelength of red or infrared laser in order to perform the aberration correction for the wavelength of red or infrared laser. However, in a case where the beam shaping mirror is utilized in the finite system, because the red or infrared laser beam is transmitted by the transparent member 7c in a divergent state, it causes a problem which astigmatism is generated or the like.

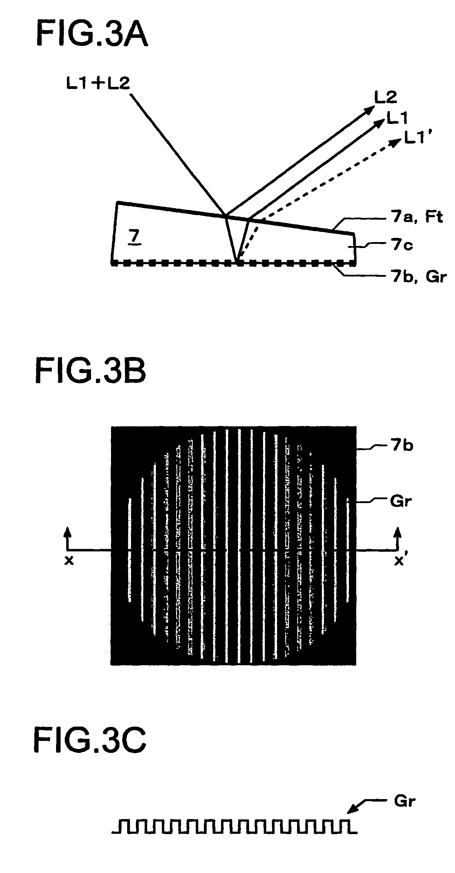

To solve the above described problem, in the present embodiment (Fig. 1), the wavelength selection film Ft transmitting the blue laser beam B1 and reflecting the red laser beam B2 and the infrared laser beam B3 is formed on the first optical surface 7a and the diffraction grating Gr for performing the optical axis correction for the blue laser beam B1 is formed on the second optical surface 7b. A structure of the beam shaping mirror 7 which has the wavelength selection film Ft and the diffraction grating Gr as above described is shown in Figs. 3A to 3C. Fig. 3A shows a cross sectional structure of the beam shaping mirror 7 schematically, Fig. 3B shows a diffraction pattern structure of the diffraction grating Gr, and Fig. 3C shows a cross sectional surface when cut along a line x - x' in Fig. 3B schematically. As shown in Fig. 3B, the diffraction grating Gr is structured to have a diffraction pattern structure in which linear grooves extend in one direction are aligned in parallel in an effective optical path region (or in whole area) of the second optical surface 7b. Further, the diffraction grating Gr has a structure in which a plurality of linear grooves having a rectangular shape cross section, are formed as shown in Fig. 3C. However, the diffraction grating which has a structure in which a plurality of linear grooves having a saw tooth shape cross section are formed, may be utilized as the diffraction grating Gr. In addition, the reflecting function of the diffraction grating Gr in the transparent member 7c can be obtained by forming, for example, a metal film or a dielectric multilayer on the second optical surface 7b.

The red laser beam B2 or the infrared laser beam B3 which is output from the collimator lens 4 is input to the beam shaping mirror 7 as the finite system light as shown in Fig. 1. Then, the red laser beam B2 or the infrared laser beam B3 is reflected toward the objective lens 9 by the wave selection film Ft which is formed on the first optical surface 7a of the beam shaping mirror 7. At this time an attaching angle of the beam shaping mirror 7 is set such that the laser beam B2 or B3 which is input to the objective lens 9 does not have any inclination angle with respect to the optical axis AX and the positional relation with the objective lens 9 is adjusted in order that a central position of the beam intensity agrees with the optical axis AX. Because the red laser beam B2 or the infrared laser beam B3 is reflected at the first optical surface 7a of the beam shaping mirror 7, it is not transmitted by the transparent member 7c in the divergent state. As a result, the astigmatism is not generated in the beam shaping mirror 7.

The blue laser beam B1 output from the collimator lens 4 is input to the beam shaping mirror 7 as the infinite system light as shown in Fig. 1. Then, the beam shaping is performed by transmitting it by the wavelength selection film Ft which is formed on the first optical surface 7a, then reflecting it by the diffraction grating Gr which is formed on the second optical surface 7b, transmitting it by the wavelength selection film Ft and outputting it from the beam shaping mirror 7. Generally in a beam shaping in which the laser beam is converted from the elliptic shape beam to the circular shape beam, there are a type which enlarges a beam diameter in minor axis direction of a cross section of the elliptic shape beam and a type which reduces the beam diameter in major axis direction of the cross section of the elliptic shape beam. In the optical pickup device 11 which is shown Fig. 1, the type which enlarges the beam diameter of the blue laser beam B1 in the minor axis direction of the cross section of the elliptic shape beam is employed for the beam shaping. However, it is also possible to employ a type which reduces the beam diameter of the blue laser beam B1 in the major axis direction of the cross section of the elliptic shape beam in the optical pickup device 11 by alteration of a layout of the beam shaping mirror 7.

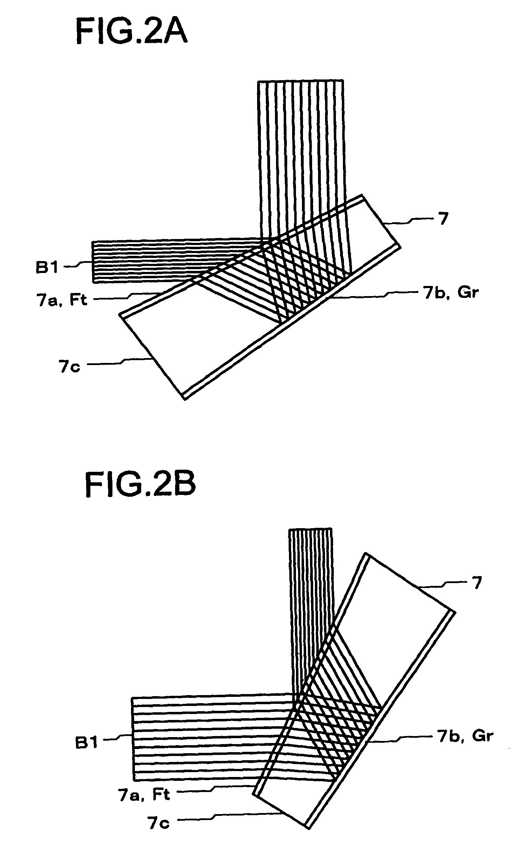

In Fig. 2A a layout and an optical path of the beam shaping mirror 7 are shown when the beam diameter of the blue laser beam B1 is enlarged in the minor direction of the cross section of the elliptic shape beam. And in Fig. 2B a layout and an optical path of the beam shaping mirror 7 are shown when the beam diameter of the blue laser beam B1 is reduced in the major direction of the cross section of the elliptic shape beam. Even when the beam shaping is performed in any types shown in Figs. 2A and 2B, the light intensity distribution of the laser beam can be converted from the elliptic shape to the circular shape which is ideal by adjustment of angle, space, and the like formed by the first optical surface 7a and the second optical surface 7b into a prescribed values. Therefore, it is possible to form a good beam spot which has the high rim strength on the recording surface of the optical disc 12.

The beam shaping for the blue laser beam B1 is performed by the beam shaping mirror 7 as above described. When the blue laser beam B1 is reflected by the diffraction grating Gr which is formed on the second optical surface 7b, the inclination correction with respect to the optical axis AX is performed by diffracting action of the diffraction grating Gr. For example, when the blue laser light L1 and the red laser light L2 are input from the first optical surface 7a to the transparent member 7c at the same incident angle as shown in Fig. 3A, the blue laser light L1' (dotted line) becomes output from the first optical surface 7a in a different direction from the red laser light L2 if no inclination correction is performed at the diffraction grating Gr. When the inclination correction is performed at the diffraction grating Gr as the present embodiment, it becomes possible for the blue laser light L1 (solid line) to be output from the first optical surface 7a in the same direction (in other words, in the parallel direction) as the red laser light L2 by it's diffracting action. That is to say, it becomes possible for the laser beams B1 to B3 to be input to the objective lens 9 from the same direction by the diffracting action of the diffraction grating Gr, as a result, generation of the coma aberration can be avoided.

When the inclination correction of the blue laser beam B1 is performed as above described, it causes the positional displacement in the center position of the beam intensity between the blue laser beam B1 and the beams: the red laser beam B2 and the infrared laser beam B3. If there is any positional displacement, there is possibility that it causes a problem of control (tracking control, focusing control, and the like) because an offset or the like is generated in the photo detector 6a, 6b. Therefore it is preferable that the semiconductor laser 1b for the blue laser is attached in slanted manner as shown in Fig. 1 in order that the center positions of the beam intensity of the respective laser beams B1 to B3 agree with each other. By disposing the laser light source 1b for the blue laser in slanted manner in order that the center positions of the light intensity of the respective laser beams B1 to B3 agree with each other, it becomes possible to correct the positional displacement of the blue laser beam B 1 with respect to the other laser beams B2 and B3 by simple structure. In addition, it is possible to perform the adjustment for conforming the center position of the beam intensity by disposing separately the collimator lenses 4 for respective semiconductor lasers 1a, 1b and by moving a part from the semiconductor laser 1a for the blue laser to the collimator lens which corresponds to the semiconductor laser in a direction perpendicular to the optical axis.

As explained above, because the optical pickup device 11 is structured such that the blue laser beam B1 is input to the objective lens 9 as the infinite system light, and the red laser beam B2 and the infrared laser beam B3 are input to the objective lens 9 as the finite system lights, it becomes possible to perform adequately the aberration correction for the respective laser beams B1 to B3. Even though the optical pickup device 11 is structured such that the red laser beam B2 and the infrared laser beam B3 are input to the objective lens 9 as the finite system lights, there is no generation of the astigmatism at the beam shaping mirror 7 because the red laser beam B2 and the infrared laser beam B3 are reflected by the wavelength selection film Ft. On the other hand, because the blue laser beam B1 is converted in its light intensity distribution from the elliptic shape to the circular shape by the beam shaping mirror 7, a minute beam spot can be obtained efficiently. Further, because the optical pickup device has a structure in which the diffraction grating Gr diffracts the blue laser beam B1 such that the directions of the laser beams B1 to B3 having the three wavelengths which are output from the beam shaping mirror 7 become the same, the laser beams B1 to B3 having the three wavelengths can be input to the objective lens 9 from the same direction by the inclination correction with respect to the optical axis AX, as a result, generation of the coma aberration can be avoided. Therefore, an optical pickup device 11 having three wavelengths compatibility and able to obtain good beam spot for the laser beams having the three wavelengths can be realized.

As a result, it is possible to obtain good signal (for example, recording signal and reproducing signal) by the beam shaping of the laser beams having the three wavelengths λ1 to λ3 and the inclination correction with respect to the optical axis AX even in a simple and compact structure. Because the laser beams can be input to the objective lens 9 from the same direction even when any one of the laser beams B 1 to B3 having the three wavelengths λ1 to λ3 is used, it becomes possible to secure the compatibility for the three kinds of optical discs 12 (BD, DVD, CD). Further, because high use efficiency of light is required for the blue laser beam B 1 which has a shorter wavelength, there is a great merit to attain the three wavelength compatibility of the optical pickup device 11 in obtaining good beam spot by the beam shaping.

When the transparent member 7c is structured to have a trapezoidal shape (or a wedge shape) cross section as the present embodiment, the beam shaping can be performed by a simple structure. Further, when the diffraction grating Gr formed by a plurality of linear grooves having rectangular shape cross section (or saw tooth shape cross section) is utilized on the beam shaping mirror 7, the inclination correction with respect to the optical axis AX can be performed by a simple structure. Still further, when the laser light source 1b for the blue laser which the inclination correction is performed, is disposed in slanted manner in order that the center positions of the light intensity of the laser beams B 1 to B3 having the three wavelengths agree with each other, positional displacement for other laser beams B2, B3 can be corrected by a simple structure.

As it can be understood by the above described explanation, in an optical pickup device which is applicable to a plurality of kinds of optical discs in which wavelengths of used laser beams are different by a plurality of laser light sources which emit laser beams having different wavelength each other and one objective lens, the aberration correction for the respective laser beams can be adequately performed by a structure in which a first laser beam is input to the objective lens as an infinite system light and a second laser beam is input to the objective lens as finite system light. Even if the device is structured such that the second laser beam is input to the objective lens as the finite system light, there is no generation of the astigmatism at the beam shaping mirror because the second laser beam is reflected by the wavelength selection film. On the other hand, because light intensity distribution of the first laser beam is converted from an elliptic shape to a circular shape by the beam shaping mirror, minute beam spot can be obtained efficiently. Further, because the first and second laser beams emitted from the beam shaping mirror can be input to the objective lens from the same direction by the inclination correction with respect to the optical axis by a structure in which the diffraction grating diffracts the first laser beam in order that the directions of the first and second laser beams which are output from the beam shaping mirror become the same, as a result, generation of coma aberration can be avoided. Therefore, an optical pickup device having compatibility for a plurality of wavelengths and able to obtain good beam spots in the respective wavelengths can be realized.

When the transparent member is structured such that it has a trapezoidal shape cross section or a wedge shape cross section, the beam shaping can be performed by a simple structure. By utilizing the diffraction grating formed by a plurality of linear grooves having a rectangular shape cross section or a saw tooth shape cross section, inclination correction with respect to the optical axis can be performed by a simple structure. When the laser light source which emits the first laser beam is disposed in slanted manner in order that center positions of light intensity of the first and second laser beams agree with each other, positional displacement with respect to the second laser beam can be corrected by a simple structure. Further, it becomes possible to obtain good beam spot by the beam shaping with increasing use efficiency of light for the first laser beam which has shorter wavelength by making the wavelength of the second laser beam longer than the wavelength of the first laser beam.

If the first laser beam is a blue laser beam and the second laser beam is at least one of the red laser beam and the infrared laser beam, compatibility for the three kinds of optical discs can be secured because the laser beam can be input to the objective lens from the same direction even when any one of the laser beam of the three wavelengths is used. For example, if the blue laser beam, the red laser beam, and the infrared laser beam are used as the laser beams emitted from the three laser light sources, the optical pickup device can be applicable to the three kinds of optical discs of CD, DVD, and BD.

## Claims

1. An optical pickup device which is applicable to a plurality of kinds of optical discs in which wavelengths of used laser beams are different by a plurality of laser light sources which emit laser beams having different wavelength each other, and one objective lens, the device comprising:
a beam shaping mirror disposed in an optical path between the objective lens and the plurality of laser light sources and composed of a transparent member which has a first optical surface on which a wavelength selection film is formed and a second optical surface on which a diffraction grating is formed, the first and second optical surfaces are positioned in not parallel, **characterized in that**
the device has a structure in which a first laser beam is input to the objective lens as infinite system light and a second laser beam is input to the objective lens as finite system light among the plurality of laser beams emitted from the plurality of laser light sources,
the wavelength selection film has wavelength selectivity transmitting the first laser beam and reflecting the second laser beam,
light intensity distribution of the first laser beam is converted from an elliptic shape to a circular shape by reflecting the first laser beam transmitted by the wavelength selection film and input to the beam shaping mirror by the diffraction grating, then transmitting it by the wavelength selection film and outputting it from the beam shaping mirror, and
the diffraction grating diffracts the first laser beam in order that directions of the first and second laser beams which are output from the beam shaping mirror become the same.

2. The optical pickup device according to claim 1, **characterized in that** the transparent member has a trapezoidal shape cross section or a wedge shape cross section.

3. The optical pickup device according to claim 1 or claim 2, **characterized in that** the diffraction grating is formed by a plurality of linear grooves having a rectangular shape cross section or a saw tooth shape cross section.

4. The optical pickup device according to any one of claim 1 to claim 3, **characterized in that** the laser light source which emits the first laser beam is disposed in slanted manner in order that center positions of light intensity of the first and second laser beams agree with each other.

5. The optical pickup device according to any one of claim 1 to claim 4, **characterized in that** wavelength of the second laser beam is longer than wavelength of the first laser beam.

6. The optical pickup device according to any one of claim 1 to claim 5, **characterized in that** the first laser beam is a blue laser beam, and the second laser beam is at least one of a red laser beam and an infrared laser beam.

7. An optical pickup device which is applicable to three kinds of optical discs in which wavelengths of used laser beams are different by three laser light sources which emit respectively a blue laser beam, a red laser beam, and an infrared laser beam, and one objective lens, the device comprising:
a beam shaping mirror disposed in an optical path between the objective lens and the three laser light sources and composed of a transparent member which has a first optical surface on which a wavelength selection film is formed and a second optical surface on which a diffraction grating is formed, the first and second optical surfaces are positioned in not parallel, and
a collimator lens disposed in the optical path between the beam shaping mirror and the three laser light sources and converting the blue laser beam into parallel light, **characterized in that**
the device has a structure in which the blue laser beam is input to the objective lens as infinite system light, and the red laser beam and the infrared laser beam are input to the objective lens as finite system lights,
the laser light source which emits the blue laser beam is disposed in slanted manner in order that center positions of light intensity of the blue laser beam, the red laser beam, and the infrared laser beam agree with each other,
the transparent member has a trapezoidal shape cross section or a wedge shape cross section,
the diffraction grating is formed by a plurality of linear grooves having a rectangular shape cross section or a saw tooth shape cross section,
the wavelength selection film has wavelength selectivity transmitting the blue laser beam and reflecting the red laser beam and the infrared laser beam,
light intensity distribution of the blue laser beam is converted from an elliptic shape to a circular shape by reflecting the blue laser beam transmitted by the wavelength selection film and input to the beam shaping mirror by the diffraction grating, then transmitting it by the wavelength selection film and outputting is from the beam shaping mirror, and
the diffraction grating diffracts the blue laser beam in order that directions of the blue laser beam, the red laser beam and the infrared laser beam which are output from the beam shaping mirror become the same.
